# EUROPÄISCHE PATENTSCHRIFT

(11) **EP 1 088 643 B1**
(45) Veröffentlichungstag und Bekanntmachung des Hinweises auf die Patenterteilung: **12.02.2003**
(21) Anmeldenummer: 00120653.1
(22) Anmeldetag: 21.09.2000
(51) Int. Cl.: B29C 47/90

(54) **Vorrichtung zum Kalibrieren extrudierter Profile**
Apparatus for calibrating extruded profiles
Appareil à calibrer des profilés extrudés

(30) Priorität: 01.10.1999 DE 29917344 U
(43) Veröffentlichungstag der Anmeldung: 04.04.2001
(73) Patentinhaber: Kömmerling Kunststoff GmbH, 66954 Pirmasens (DE)
(72) Erfinder: Weid, Jürgen, 66994 Dahn (DE)
(74) Vertreter: Vièl, Christof, Dipl.-Ing.

(56) Entgegenhaltungen:
- EP-A- 0 688 657

## Beschreibung

Die Erfindung betrifft eine Vorrichtung zum Kalibrieren extrudierter Profile, wobei auf einem Trägerrahmen, der sich mit seiner Längsrichtung in Extrusionsrichtung erstreckt, ein Paar von parallel in Längsrichtung angeordneten Kalibrierorganen vorgesehen ist.

Mittels Extrusion können Profile mit ungleichmäßigem Querschnitt erhalten werden, z.Bsp. Fensterprofile oder Rolladenprofile. Während der Abkühlphase werden die aus dem Extrusionswerkzeug ausgetretenen Profile in der Regel durch ein Kalibrierorgan hindurchgeführt, um den Querschnitt bis zum vollständigen Abkühlen konstant zu halten. Das Kalibrierorgan ist üblicherweise auf einem Trägerrahmen befestigt, der auch die Funktion von Sammelleitungen für die Zufuhr von Kühlwasser und für das Aufrechterhalten des Vakuums übernimmt. Um das Kalibrierorgan an das Werkzeug anzuschließen, ist in der Regel eine Verschiebbarkeit in Extrusionsrichtung vorgesehen.

Der Wechsel oder die Wartung des zu extrudierenden Profils stellt jeweils einen kritischen Augenblick im Produktionsprozeß dar, denn hierfür müssen die Anschlüsse der Kühlwasserleitungen und Vakuumleitungen gelöst, die Kalibriervorrichtung demontiert, eine andere Kalibriervorrichtung montiert und in Flucht gebracht werden sowie die Kühlwasseranschlüsse und Vakuumleitungen wieder verbunden werden. Dies erfordert eine beträchtliche Zeit, in der keine Produktion stattfinden kann.

Um auf einfache und schnelle Weise einen derartigen Wechsel vorzunehmen, wird in der italienischen Patentanmeldung B098A000669 eine Vorrichtung zum Kalibrieren von Profilen in einem Kunststoffextruder vorgeschlagen, bei der ein quer zur Extrusionslängsrichtung verstellbarer Auflageboden vorhanden ist, auf dem nebeneinander ein Paar von Kalibrierorganen in Längsrichtung angeordnet ist. Hierdurch ist es möglich, schnell einen Wechsel der verwendeten Kalibriervorrichtung vorzunehmen. Das Kalibrierorgan, das nach dem Wechsel nicht mehr in Betrieb ist, kann anschließend demontiert werden. Allerdings muß das Werkzeug im vorgewärmten Zustand zwischen der Extrusionsvorrichtung und dem Kalibrierorgan mittels Hebemitteln angeordnet werden.

Aus der EP 0 688 657 A1 ist eine Düsenwechselvorrichtung für eine Extrusionsmaschine bekannt, bei der eine Wechslervorrichtung vorgesehen ist, welche ein Trägerelement für zumindest zwei auswechselbare Formwerkzeuge und/oder Schneidwerkzeuge aufweist, das im Bereich der Materialaustrittsöffnung relativ zur Extrusionspresse bewegbar angeordnet ist. Das Trägerelement ist kreisbogenförmig ausgebildet und schwenkbar gelagert, wobei die Schwenkachse zur Ebene der Materialaustrittsöffnung versetzt und im wesentlichen zu dieser senkrecht angeordnet ist. Dieses Trägerelement ist zwischen dem Trägerrahmen und dem Werkzeug angeordnet und relativ kostspielig.

Aufgabe der Erfindung ist es, eine kostengünstige Lösung für einen schnellen Wechsel der Kalibriervorrichtung zu schaffen.

Diese Aufgabe wird erfindungsgemäß dadurch gelöst, daß an der der Extrusionsvorrichtung zugewandten Querseite des Trägerrahmens zwei den Kalibrierorganen zugeordnete, vertikal klappbare und in horizontaler Position feststellbare Werkzeughalterungen vorgesehen sind und daß Mittel zum translatorischen Verfahren quer zur Extrusionsrichtung vorgesehen sind, um das eine oder andere Kalibrierorgan mit der Achse des Extrusionswerkzeuges in Flucht zu bringen.

Hierdurch wird es möglich, während des Extrudierens mit einem Kalibrierorgan auf der anderen Werkzeughalterung das Werkzeug aufzubauen und vorzuwärmen sowie das Kalibrierorgan vorzubereiten. Beim Wechsel der Kalibrierung wird dann das bisher genutzte Werkzeug mit der Werkzeughalterung nach unten geklappt und das Werkzeug sowie das dahinter angeordnete Kalibrierorgan mit der Extrusionsvorrichtung in Flucht gebracht, was nur wenige Minuten beansprucht.

Eine Ausbildung der Erfindung besteht darin, daß der Trägerrahmen quer zur Extrusionsrichtung verfahrbar ist.

Es ist zweckmäßig, daß im Bereich der Werkzeughalterungen Mittel zum Vorwärmen des Werkzeuges vorgesehen sind.

Es liegt im Rahmen der Erfindung, daß zum Feststellen der Werkzeughalterungen in horizontaler Position am Trägerrahmen Arretierstangen zum Einschieben in Bohrungen der Werkzeughalterungen vorgesehen sind.

Die Vorteile der Erfindung bestehen im wesentlichen darin, daß durch das Wegklappen der Werkzeughalterung mit dem darauf angeordneten Werkzeug eine platzsparende, das in Flucht bringen von Extrusionsvorrichtung einerseits und Werkzeug und Kalibrierorgan andererseits erleichternde Vorrichtung geschaffen wird.

Im folgenden wird ein Ausführungsbeispiel der Erfindung anhand von Zeichnungen erläutert.

Es zeigen
- Fig. 1: eine perspektivische Darstellung der erfindungsgemäßen Vorrichtung,
- Fig. 2: eine Ansicht der Querseite der erfindungsgemäßen Vorrichtung,
- Fig. 3: eine Ansicht der Längsseite der erfindungsgemäßen Vorrichtung und
- Fig. 4: eine Draufsicht auf die erfindungsgemäße Vorrichtung.

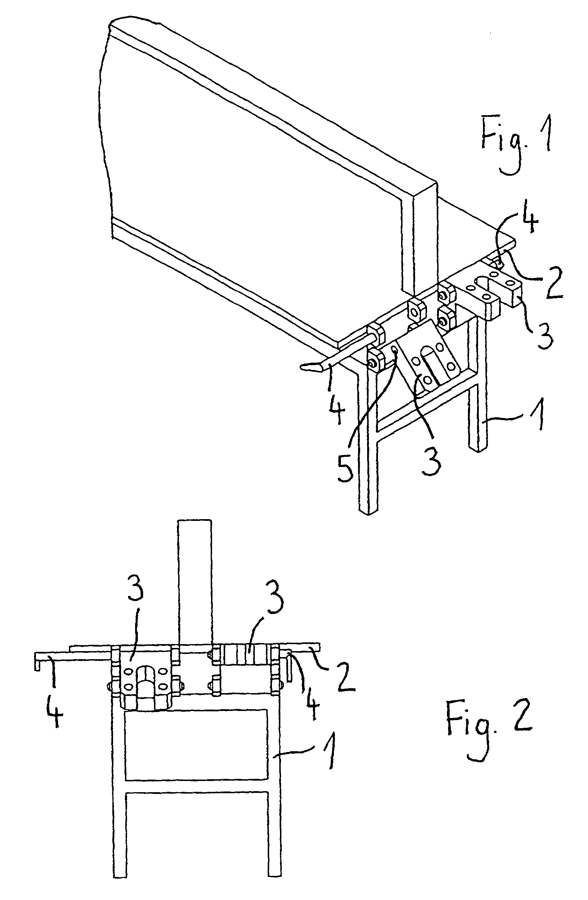

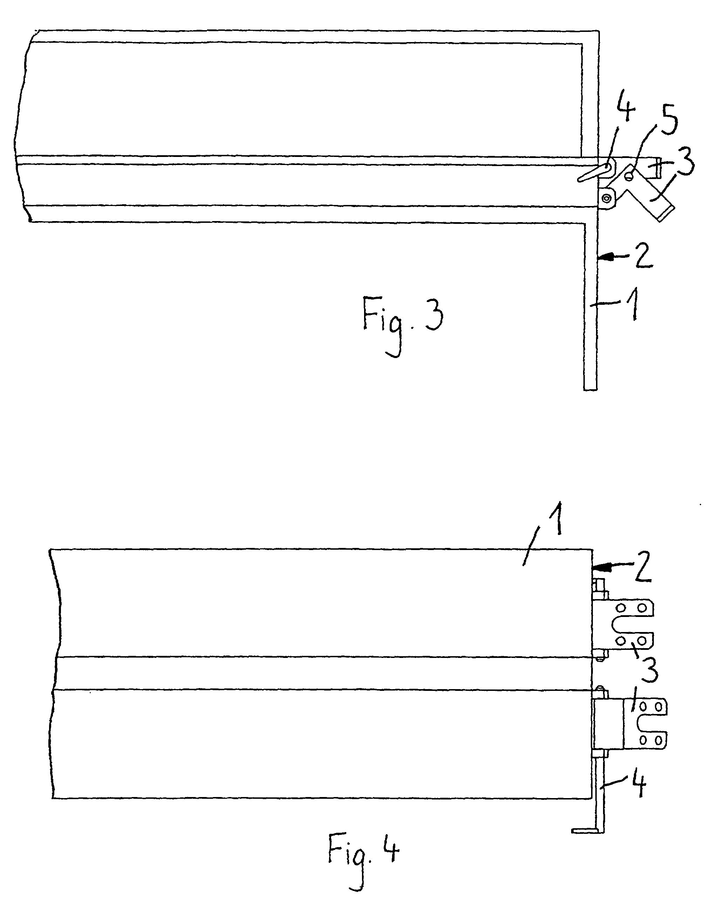

Wie in den Fig. 1 bis 4 dargestellt, besteht die erfindungsgemäße Vorrichtung aus einem Trägerrahmen 1, der sich mit seiner Längsrichtung in Extrusionslängsrichtung erstreckt, und auf dem ein Paar von parallel in Längsrichtung angeordneten Kalibrierorganen (nicht dargestellt) angeordnet werden kann.

An dem der Extrusionsvorrichtung zugewandten Querseite 2 des Trägerrahmens 1 sind zwei Werkzeughalterungen 3 vorgesehen, auf denen Extrusionswerkzeuge (nicht dargestellt) befestigt werden können.

Die Werkzeughalterungen 3 sind in vertikaler Richtung schwenkbar und in horizontaler Stellung feststellbar, wobei letzteres beispielsweise über an dem Trägerrahmen 1 gehaltene Arretierstangen 4 erfolgen kann, die in Bohrungen 5 der Werkzeughalterungen 3 eingeschoben werden können, erreicht werden kann.

Der Trägerrahmen 1 ist über geeignete Mittel, beispielsweise einen Elektromotor und einen Zahnstangenantrieb zumindest quer zur Extrusionsvorrichtung verfahrbar, möglichst auch in Extrusionslängsrichtung.

Um das Vorwärmen des auf der Werkzeughalterung 3 vorgehaltenen Werkzeuges zu ermöglichen, sind Mittel zum Vorwärmen des Werkzeuges vorgesehen, die z.B. als Manschetten mit Heizwendel ausgebildet sein können.

Auf diese Weise kann während des über ein Werkzeug und das nachgeordnete Kalibrierorgan erfolgenden Extrudierens ein anderes Werkzeug auf der zweiten Werkzeughalterung 3 vorgewärmt und diesem ein Kalibrierorgan nachgeschaltet werden, so daß bei einem Wechsel der Kalibrierung nur noch das bisherige Werkzeug nach unten geklappt und der Trägerrahmen 1 quer zur Extrusionslängsrichtung verfahren werden muß, um sofort über das neue, vorgewärmte Werkzeug weiterextrudieren zu können.

## Patentansprüche

1. Vorrichtung zum Kalibrieren extrudierter Profile, wobei auf einem Trägerrahmen, der sich mit seiner Längsrichtung in Extrusionsrichtung erstreckt, ein Paar von parallel in Längsrichtung angeordneten Kalibrierorganen vorgesehen ist, **dadurch gekennzeichnet, daß** an der der Extrusionsvorrichtung zugewandten Querseite (2) des Trägerrahmens (1) zwei den Kalibrierorganen zugeordnete, vertikal klappbare und in horizontaler Position feststellbare Werkzeughalterungen (3) vorgesehen sind und daß Mittel zum translatorischen Verfahren quer zur Extrusionsrichtung vorgesehen sind, um das eine oder andere Kalibrierorgan mit der Achse der Extrusionsvorrichtung in Flucht zu bringen.

2. Vorrichtung gemäß Anspruch 1, **dadurch gekennzeichnet, daß** der Trägerrahmen (1) quer zur Extrusionsrichtung verfahrbar ist.

3. Vorrichtung gemäß Anspruch 1, **dadurch gekennzeichnet, daß** im Bereich der Werkzeughalterungen (3) Mittel zum Vorwärmen des Werkzeuges vorgesehen sind.

4. Vorrichtung gemäß Anspruch 1, **dadurch gekennzeichnet, daß** zum Feststellen der Werkzeughalterungen (3) in horizontaler Position am Trägerrahmen Arretierstangen (4) zum Einschieben in Bohrungen (5) der Werkzeughalterungen (3) vorgesehen sind.

## Claims

1. An apparatus for calibrating extruded profiles, a pair of parallel calibrators being provided which are mounted longitudinally on a carrier frame extending axially in the direction of extrusion, **characterised in that** two hinged, fold-down tool holders (3) are provided at the end (2) - facing towards the extruder - of the carrier frame (1), each tool holder being assigned to a calibrator and being lockable in horizontal position, and that means permitting translatory movement across the extrusion direction are provided for bringing one or other of the calibrators into alignment with the axis of the extruder.

2. The apparatus of claim 1, **characterised in that** the carrier frame (1) is movable transverse to the direction of extrusion.

3. The apparatus of claim 1, **characterised in that** means for preheating the die are provided in the vicinity of the tool holders (3).

4. The apparatus of claim 1, **characterised in that** locking rods (4) for fixing the tool holders (3) in horizontal position are provided on the carrier frame, the rods being slid into holes (5) drilled in the tool holders (3).

## Revendications

1. Dispositif pour le calibrage de profilés extrudés, dans lequel une paire d'organes de calibrage disposés parallèlement dans le sens de leur longueur est prévue sur un cadre porteur qui s'étend dans le sens de sa longueur dans la direction de l'extrusion, **caractérisé en ce que** deux supports d'outil (3) pouvant basculer verticalement et pouvant être bloqués horizontalement sont prévus sur la face latérale (2) du cadre porteur (1) dirigée vers le dispositif d'extrusion, ces supports d'outil (3) étant attribués aux organes de calibrage, et **en ce que** des moyens sont prévus pour un déplacement en translation transversalement au sens de l'extrusion afin d'aligner l'un ou l'autre des organes de calibrage avec l'axe du dispositif d'extrusion.

2. Dispositif selon la revendication 1, **caractérisé en ce que** le cadre porteur (1) peut être déplacé transversalement au sens de l'extrusion.

3. Dispositif selon la revendication 1, **caractérisé en ce que** des moyens pour le préchauffage de l'outil sont prévus dans la zone des supports d'outil (3).

4. Dispositif selon la revendication 1, **caractérisé en ce que** des barres de blocage (4) sont prévues pour bloquer les supports d'outil (3) en position horizontale sur le cadre porteur, ces barres de blocage (4) pouvant être introduites dans des trous (5) prévus dans les supports d'outil (3).
